# EUROPEAN PATENT APPLICATION

(11) **EP 3 683 443 A1**
(43) Date of publication of application: **22.07.2020**
(21) Application number: 19209055.3
(22) Date of filing: 14.11.2019
(51) Int. Cl.: F04C 18/02, F04C 29/00

(54) **MOTOR-OPERATED COMPRESSOR**

(30) Priority: 18.01.2019 KR 20190007016
(71) Applicant: LG Electronics Inc., SEOUL, 07336 (KR)
(72) Inventor: YIM, Woogyong, 08592 Seoul (KR); KIM, Jehoon, 08592 Seoul (KR); GWON, Ochang, 08592 Seoul (KR); KIM, Taekyoung, 08592 Seoul (KR)
(74) Representative: Vossius & Partner Patentanwälte Rechtsanwälte mbB

(57) **Abstract**

According to one embodiment, there is provided a motor-operated compressor including: a rotation shaft; a first scroll that performs orbiting motion and provided with an eccentric coupling portion eccentrically coupled to the rotation shaft; a second scroll coupled to the first scroll to form a pair of compression chambers; a rotor coupled to the rotation shaft; a stator that forms an accommodation space in which the rotor is provided and rotates the rotor by magnetic interaction with the rotor; and an eccentricity compensation portion that compensates for an eccentric displacement of the center of gravity of the rotation shaft, in response to the orbiting motion of the first scroll, wherein the eccentricity compensation portion includes: a first member that is provided on one end of the stator; and a second member that is positioned on the rotor to be adjacent to the first member such that a magnetic attraction force acts between the second member and the first member.

## Description

The present disclosure relates to a motor-operated compressor.

Generally, various types of compressors that play a role in compressing refrigerant in a vehicle air conditioning system has been developed. With the recent trend of equipping a vehicle with an electronic device, motor-operated compressors that are driven electrically using a motor have been actively developed.

Among many types of compression, scroll compression that is a type suitable for high-compression-ratio driving is widely used for a motor-operated compressor. In a motor-operated compressor that is this type of scroll, a motor unit, which is configured with a turning motor, is installed within a closed casing, and a compression unit, which is configured with a fixed scroll and an orbiting scroll, is installed on one side of the motor unit. Then, the motor unit and the compression unit are connected with each other a rotation shaft, and a rotational force of the motor unit is transferred to the compression unit.

The rotational force that is transferred to the compression unit causes the orbiting scroll to perform orbiting motion with respect to the fixed scroll. Thus, a pair of compression chambers, each of which is made up of an intake pressure chamber, an intermediate pressure chamber, and a discharge pressure chamber, is formed. For compression, refrigerant is forced to flow into the two compression chambers, and at the same time, is discharged.

On the other hand, the rotation shaft is coupled eccentrically to the orbiting scroll such that the orbiting scroll performs the orbiting motion. More specifically, the rotation shaft is coupled in a position that is at some distance away from the center of the orbiting scroll. Accordingly, the orbiting scroll performs the orbiting motion using the rotational force of the rotation shaft.

However, the rotation shaft is coupled eccentrically to the orbiting scroll. Thus, the center of gravity of the rotation shaft moves farther in a direction that deviates eccentrically from the axial center of the rotation shaft. Thus, when the rotation shaft rotates, shaking occurs due to an eccentric displacement of the center of gravity. This causes a problem that vibration increases and the efficiency of the compressor decreases.

In the related art, a balance weight with predetermined mass is installed in a direction that is opposite to a direction that eccentricity occurs with respect to the axial center of the rotation shaft, thereby compensating an eccentric displacement of the center of gravity from the axial center of the rotation shaft. This balance weight is made of a metal material having comparatively large mass per unit volume and is mounted on the rotation shaft between a driving motor and the orbiting scroll.

In Patent Document 1 [Korean Registration Patent Application No. 10-1376618 (March 14, 2014)], a structure is disclosed in which the balance weight that counterbalances an eccentric axial load is mounted between the driving motor and the orbiting scroll. In this structure, there is a need for the balance weight to rotate between the driving motor and the orbiting scroll, and thus, there is a problem that a length of the compressor increases in terms of structure. Furthermore, the mass increases that is necessary to compensate for the eccentric axial load on the rotation shaft. Thus, a heavier balance weight is necessary.

On the other hand, in Patent Document 2 [Korean Patent Application No. 10-2012-0016075 (August 26, 2013)], a structure is disclosed in which the balance weight is mounted on an upper or lower portion (or one end or the other end of a rotor) to compensate for an eccentric displacement of the center of gravity of the rotation shaft. With this structure, the balance weight is mounted in a manner that is relatively positioned at some distance from the center of the rotation shaft. That is, mass necessary to compensate for the eccentric axial load on the rotation shaft is relatively smaller than in Patent Document 1.

However, in structures in Patent Document 1 and Patent Document 2, as a weight of the rotation shaft and/or a weight of the rotor increases, an output of the driving motor necessarily increases. That is, due to an unnecessary increase in torque of the dive motor, there occurs a problem in that the overall efficiency of the compressor is reduced. Furthermore, because the balance weight is made of a comparatively high-priced metal material having large mass per unit volume, there occurs a problem in that the cost of manufacturing the compressor increases.

Therefore, an aspect of the detailed description is to provide a motor-operated compressor that is capable of reducing a weight of a driving motor and a length in an axial direction of the driving motor, and of increasing utilization of a space within a motor room.

Another aspect of the detailed description is to a motor-operated compressor that is capable of reducing a weight of a driving motor and a length in an axial direction of the driving motor without the use of any balance weight made of a metal material and of increasing utilization of a space within a motor room.

Still another aspect of the detailed description is to provide a motor-operated compressor that is capable of using a magnetic force instead of a balance weight.

To achieve these and other advantages and in accordance with the purpose of this specification, as embodied and broadly described herein, there is provided a motor-operated compressor, including a first member that is provided on a stator, and a second member that is provided on a rotor and generates a magnetic attraction force with respect to the first member, and compensating for an eccentric displacement of the center of gravity of a rotation shaft, about which an orbiting scroll performs orbiting motion, using a magnetic force.

Here, the first member may be made of a ferromagnetic material, and may be formed to extend in a circumferential direction to have the shape of a ring. In the motor-operated compressor, the second member may be made of a magnetic member that produces a line of magnetic force and may be provided to be eccentric toward an opposite side to the center of gravity of the rotation shaft, based on the axial center of the rotation shaft.

To achieve those aspects and other advantages of the present invention, there is provided a motor-operated compressor, including a rotation shaft, a first scroll performing an orbiting motion and provided with an eccentric coupling portion eccentrically coupled to the rotation shaft, a second scroll that is coupled to the first scroll to form a pair of compression chambers, a rotor that is coupled to the rotation shaft, a stator that forms an accommodation space in which the rotor is provided and rotates the rotor by magnetic interaction with the rotor, and an eccentricity compensation portion that is configured to compensate for an eccentric displacement of the center of gravity of the rotation shaft as the first scroll performs the orbiting motion. In the motor-operated compressor, the eccentricity compensation portion may include a first member that is provided on one end of the stator, and a second member that is provided on the rotor to be adjacent to the first member such that a magnetic attraction force is applied between the second member and the first member.

In addition, the first member may extend along a circumferential direction of the stator, and the second member may have a magnetic property and may be positioned at a position opposite to the eccentric coupling portion with respect to the center of the rotor.

That is, the first member may extend along a circumferential direction of the stator to have the shape a ring. Moreover, the first member may be made of a ferromagnetic material, such as a metal, and the second member may be configured as a permanent magnet having a predetermined magnetic force. Accordingly, regardless of rotation of the second member, the first member may keep facing the second member. In other words, the magnetic attraction force may continuously act between the first member and the second member.

In addition, the rotor may include a plurality of magnetic members that are arranged to be spaced apart from one another in the circumferential direction of the rotor, and the second member may be positioned to overlap at least one or several of the plurality of magnetic members in an axial direction.

In addition, the rotor may include a rotor core provided with a magnetic member accommodation groove to accommodate the plurality of magnetic members therein, and a rotor core extension portion stacked on the rotor core and having a second member accommodation groove to accommodate the second member therein.

Here, the rotor core of the rotor and the stator core of the stator may be formed by stacking multiple plates. At this point, the rotor core may be formed to have a length that is longer than a length in the axial direction, of the stator core. That is, the number of plates that are stacked to make up the rotator core may be greater than the number of plates that are stacked to make up the stator core. Plates of the rotor core that do not correspond to the plates of the stator core may be formed to accommodate the second member. In other words, at least one or several of the multiple plates that make up the rotor core may be disposed to accommodate the second member.

In addition, in the motor-operated compressor, the magnetic member accommodation groove and the second member accommodation groove may be formed to extend in the axial direction. That is, the rotor core extension portion that is formed to accommodate the second member may have the same shape as the rotor core. In this case, there is no need for an additional process for accommodating the second member, and thus, the manufacturing can be facilitated.

In addition, the magnetic member may extend in the axial direction to form the second member. That is, the second member may be formed integrally with the magnetic member. That, the second member may be formed using an existing magnetic member. For example, the magnetic member and the second member may be a neodymium (Nd) magnet.

On the other hand, the magnetic member and the second member may be made of different materials from each other. The magnetic member may be configured with a neodymium (Nd) magnet and the second member may be configured with a ferrite magnet.

In addition, in accordance with one embodiment of the present invention, the rotor may further include a separation member that is provided between the magnetic member and the second member to separate the second member and the magnetic member from each other in the axial direction. At this point, the separation member may be formed a material, such as plastic, which is relatively light in weight. In addition, the separation member may be made of a non-magnetic material.

In addition, in accordance with one embodiment of the present invention, the rotor core extension portion may be eccentrically formed with respect to the center of the rotation shaft. In other words, the rotor core extension portion may be divided into a first portion on which a second member is provided, and a second portion on which the second member is not provided, and the rotor core extension portion may be formed only on the first portion. In other words, the rotor core extension portion may be formed so that a cross section thereof has the shape of a semicircle or a circular arc.

In addition, the stator may include a first member coupling portion that is formed to couple the first member to the stator.

The stator may include a stator core that is formed by stacking multiple plates on top of one another, a winding coil that is wound around the stator core, and an insulator that is provided on one end and the other end of the stator core so as to insulate between the winding coil and the stator core. At this point, the first member coupling portion may be formed on the insulator to make the first member spaced apart from the stator core in the axial direction.

The first member coupling portion may be configured with a member independently of the insulator and may be mounted on the insulator. Instead, the first member coupling portion may be integrally formed with the insulator. That is, the first member is spaced apart from the stator core in the axial direction and thus the second member may be formed to extend in the axial direction so as to correspond to the first member.

In addition, the insulator may include an internal wall and an external wall that are formed to face each other with the winding coil interposed therebetween. At this point, the internal wall may be positioned adjacent to the rotor and to surround the rotator in a manner that faces the rotor. The external wall may be positioned adjacent to the casing so as to face an inner circumferential surface of the casing. At this point, the first member coupling portion may be provided on the internal wall.

On the other hand, the eccentricity compensation portion may include a first eccentricity compensation portion that is provided in one side of the rotor and the stator at a position to face the first orbiting scroll, and a second eccentricity compensation portion that is provided in the other side of the rotor and the stator. That is, the first eccentricity compensation portion may be provided on one end of the driving motor that is made up of the rotor and the stator, and the second eccentricity compensation portion may be provided on the other end.

In the motor-operated compressor, a second member of the second eccentricity compensation portion may be provided in a direction that is opposite to a second member of the first eccentricity compensation portion with respect to the center of the rotation shaft.

To achieve these and other advantages and in accordance with the purpose of this specification, as embodied and broadly described herein, there is provided a motor-operated compressor including: a fixed scroll; an orbiting scroll that is coupled to the fixed scroll to perform orbiting motion with respect to the fixed scroll; a rotation shaft that is eccentrically coupled to the orbiting scroll; a rotor that is coupled to the rotation shaft; a stator that is provided to surround an outer circumferential surface of the rotor; a first member that is provided on one end of the stator to extend along a circumferential direction of the stator; and a second member that is formed of a material having a magnetic property, which is provided on the rotor to be positioned adjacent to the first member such that a magnetic attraction force acts between the second member and the first member and to be positioned in a direction that is opposite to the orbiting scroll with respect to the center of the rotor.

Here, the rotor may include a rotor core that includes a magnetic member accommodation groove to accommodate the multiple magnetic members, and a rotor core extension portion formed on the rotor core and provided with a second member accommodation groove to accommodate the second member therein.

Here, the stator may include a stator core that is formed by stacking multiple plates on top of one another, a winding coil that is wound around the stator core; and an insulator that is provided on one end and the other end of the stator core to insulate between the winding coil and the stator core, and to which the first member is coupled. The second member may be formed to extend in an axial direction to correspond to the first member.

In a scroll-type motor-operated compressor according to the present invention, the eccentric center of gravity of the rotation shaft due to the orbiting scroll being eccentrically coupled to the rotation shaft can be compensated for by an eccentricity compensation portion including a first member and a second member between which a magnetic attraction force acts.

Accordingly, the use of a balance weight that is made of a metal material such as brass, which is mounted on a rotor and accounts for a large share of a weight of a rotor, is eliminated. Accordingly, the weight of the rotor can be reduced, and thus, an unnecessary output that does not relate to driving of a scroll can be reduced. This leads to an increase in the efficiency of the compressor.

Besides, the elimination of the relatively high-priced balance weight made of the metal material can result in reduction of the cost of manufacturing the compressor.

In addition, eccentricity compensation portions are provided on one side and the other side, respectively, of a driving motor and thus the rotation shaft is supported in a radial direction. As a result, a behavior of the rotation shaft can be more stabilized.

According to the present invention, the eccentricity compensation portion can be configured to have a smaller length in an axial direction than the existing balance weight. That is, the eccentricity compensation portion according to the present invention can occupy less space than the existing balance weight. Accordingly, utilization of a space within a motor room can be increased. Besides, a length in the axial direction, of the compressor can be reduced, and this can contribute to miniaturization of the compressor.

### BRIEF DESCRIPTION OF THE DRAWINGS

FIG. 1 is a perspective diagram of a motor-operated compressor according to the present invention.
FIG. 2 is an exploded perspective diagram of the motor-operated compressor in FIG. 1.
FIG. 3 is a cross-sectional diagram illustrating the motor-operated compressor in FIG. 1.
FIG. 4 is a perspective diagram illustrating a driving motor and a rotation shaft according to an embodiment of the present invention.
FIG. 5 is a vertically cross-sectional diagram illustrating the driving motor in FIG. 4.
FIG. 6A is a cross-sectional diagram taken along line A-A in FIG. 5.
FIG. 6B is a cross-sectional diagram taken along line B-B in FIG. 5.
FIG. 7 is a vertically cross-sectional diagram illustrating a driving motor according to another embodiment of the present invention.
FIG. 8A is a cross-sectional diagram taken along line C-C in FIG. 7.
FIG. 8B is a cross-sectional diagram taken along line D-D in FIG. 7.
FIG. 9 is a diagram illustrating a relationship between a magnetic member and a second member according to still another embodiment of the present invention.

### DETAILED DESCRIPTION OF THE DISCLOSURE

Description will now be given in detail of a motor-operated compressor according to the exemplary embodiments, with reference to the accompanying drawings.

For the sake of brief description with reference to the drawings, the same or equivalent components will be provided with the same reference numbers, and description thereof will not be repeated.

It will be understood that when an element is referred to as being "connected with" another element, the element can be connected with the other element or intervening elements may also be present. In contrast, when an element is referred to as being "directly connected with" another element, there are no intervening elements present.

A singular representation may include a plural representation unless it represents a definitely different meaning from the context.

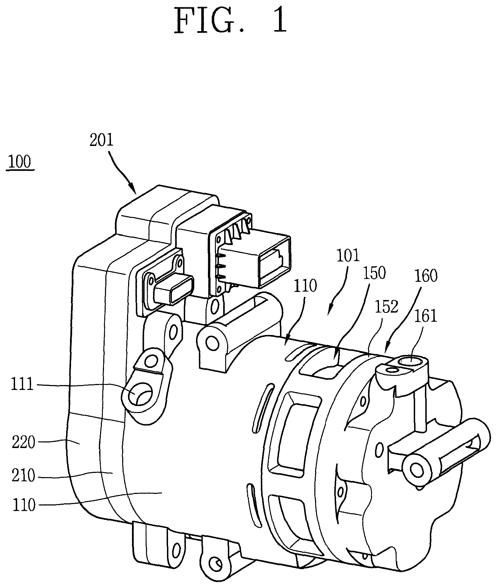

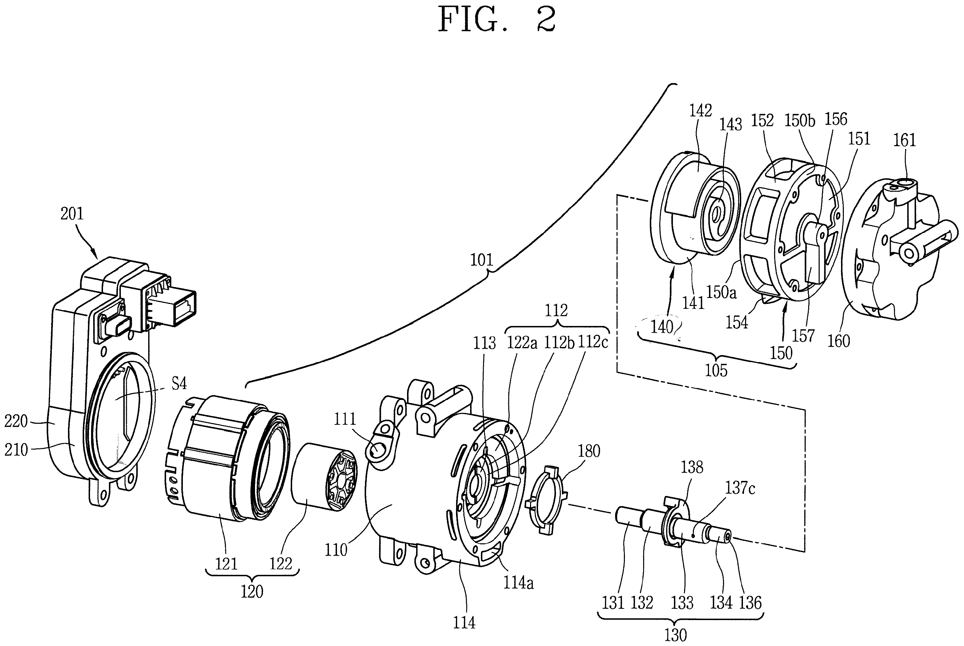

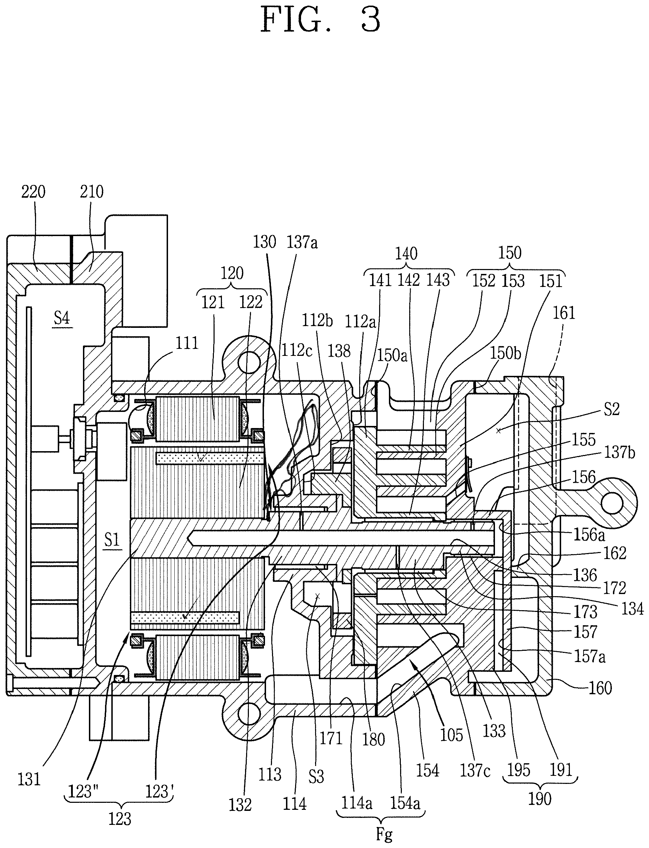

FIG. 1 is a perspective diagram of a motor-operated compressor according to the present invention. FIG. 2 is an exploded perspective diagram of the motor-operated compressor in FIG. 1. FIG. 3 is a cross-sectional diagram illustrating the motor-operated compressor in FIG. 1.

With reference to the drawings, a scroll-type motor-operated compressor (hereinafter referred to as a compressor for short) that is driven by a motor according to the present embodiment is configured with a compressor module 101 that compresses a refrigerant and an inverter module 201 that is coupled to a front side of the compressor module 101 in order to control an operation of the compressor module 101. The compressor module 101 and the inverter module 201 are successively assembled. Alternatively, they are independently manufactured and then are assembled. In the present embodiment, descriptions will be provided, with the latter case as a representative example. However, as a combination of the former and latter cases, the compressor module and the inverter module may be independently manufactured and then be successively assembled.

The compressor module 101 includes a main housing 110 of which an internal space forms a motor room S1, and in which an inlet port 111 is formed such that the main housing 110 itself communicates with a motor room, a driving motor 120 that is an motor-operated unit that is fixed to the motor room (S1) in the main housing 110, a compression unit 105 that is provided on one side of the driving motor 120 outside the main housing 110 in order to compress the refrigerant using a rotational force of the driving motor 120, and a rear housing 160 that is coupled to the other side of the compression unit 105 in order to form a discharge chamber S2.

The main housing 110 is positioned in a horizontal direction with respect to the ground. Thus, the driving motor 120 and the compression unit 105 is positioned along a horizontal direction, and the driving motor 120 and the compression unit 105 are positioned on the front and rear sides, respectively. For the convenience of description, the left and right sides of FIG. 3 are defined as the front and rear sides, respectively.

The main housing 110 is formed in the shape of a cross section of a cup, such that a front end thereof is opened and a rear end thereof is partly closed. For closing, an inverter housing 210 that will be described below is coupled to the opened front end of the main housing 110 in order to be hermetically sealed, and a frame unit 112 that supports the compression unit 105 is integrally formed on the closed rear end of the main housing 110 in an extending manner. A first shaft bearing unit 113, through which a main bearing unit 132 of a rotation shaft 130 that will be described below passes in order to be rotatably supported, is formed in the shape of a cylinder on the frame unit 112 of the main housing 110.

A first bearing 171, which is configured with a bush bearing, is inserted into the first shaft bearing unit 113 for coupling. An inner circumferential surface of the first shaft bearing unit 113 is at some distance away from the main bearing unit 132 of the rotation shaft 130, and thus a backpressure chamber S3, which will be described below, communicates with the motor room S1. An inlet port (not illustrated) 111 to which an intake pipe (not illustrated) is to be connected is formed in the vicinity of the front end of the main housing 110, and thus the motor room S1 according to the present embodiment forms a type of intake space. Therefore, a motor-operated compressor according to the present embodiment is configured with a low-pressure type compressor in which a refrigerant flows into a compression unit through an internal space in a main housing, which forms a motor room.

As described above, the frame unit is formed to be integrally combined with the main housing according to the present embodiment. Accordingly, a separate process of assembling a frame to a main housing is eliminated. Thus, not only is the number of work units reduced, but the ease of assembling of a driving motor is also increased.

On the other hand, the driving motor 120 includes a stator 121 that is inserted into an inner circumferential surface of the main housing 110 in order to be fixed, and a rotor 122 that is positioned within the stator 121 and is rotated by interaction with the stator 121. The rotation shaft 130, which rotates along with the rotor 122 and thus transfers the rotational force of the driving motor 120 to the compression unit 105, is coupled to the rotor 122.

The stator 121 is fixed by fitting a stator core 1211 into the main housing 110 using a shrinkage fitting method (or a hot pressure fitting method). Therefore, a decrease in the depth to which the stator 121 is inserted into the main housing 110 not only facilitates an assembling process, but also provides an advantage of maintaining the concentricity of the stator 121 in a process of fitting the stator 121 using the shrinkage fitting method.

The rotation shaft 130 is coupled to the center of the rotor 122 by being fitted into a rotor core 122a using the shrinkage fitting method (or the hot pressure fitting method). Both ends of the rotation shaft 130 may be supported in ra radial direction with the driving motor 120 interposed therebetween. However, as in the present embodiment, one end of the rotation shaft 130 is a fixation end that is supported at two points in a radial direction on one side of the driving motor 120, that is, on the frame unit 112 and a fixed scroll 150, and the other end of the rotation shaft 130 that is coupled to the rotor 122 of the driving motor 120 is a free end in a radial direction. The driving motor 120 will be described in detail below along with an eccentricity compensation unit 123 that constitutes a feature of the present invention.

Formed on the rotation shaft 130 are a shaft portion 131 that is coupled to the rotor 122, the main bearing unit 132 that is supported rotatably in the radial direction on the first shaft bearing unit 113, an eccentric portion 133 that is coupled eccentrically to an orbiting scroll 140, and a sub-bearing unit 134 that is supported rotatably in the radial direction on a second shaft bearing unit 156 of the fixed scroll 150. Each of the main bearing unit 132 and the sub-bearing unit 134, as described above, supports the rotation shaft 130 in the radial direction. The eccentric portion 133 transfers the rotational force of the driving motor 120 to the orbiting scroll 140 and thus, with an Oldham ring 180, the orbiting scroll 140 performs orbiting motion.

In addition, with reference to FIG. 3, axis-direction bearing protrusion portion 135 is formed on the middle of the rotation shaft 130, that is, between the main bearing unit 132 and the eccentric portion 133, in a manner that extends in the radial direction. An axis-direction bearing surface 135a of the axis-direction bearing protrusion portion 135 constitutes a thrust bearing surface, together with an axis-direction bearing surface 113a of the first shaft bearing unit 113.

In addition, a second oil supply guidance flow channel 136 is formed as result of hollowing out the rotation shaft 130 to a predetermined depth in a direction from a rear end thereof toward a front end thereof. Oil supply holes 137a, 137b, and 137c are formed, toward outer circumferential surfaces of the main bearing unit 132, the eccentric portion 133, and the sub-bearing unit 134, respectively, in the middle of the second oil supply guidance flow channel 136. This formation will be again described below together with an oil supply structure.

On the other hand, the compression unit 105, as described above, includes an orbiting scroll (a first scroll) 140 that is supported in an axial direction on a frame 160 in order to perform orbiting motion, and a fixed scroll (or a second scroll) 150 that is coupled to the orbiting scroll 140 in an engaged manner and is coupled to a rear end of the frame 160 in a fixed manner. A pair of compression chambers is formed between the orbiting scroll 140 and the fixed scroll 150 when the orbiting scroll 140 performs orbiting motion.

The orbiting scroll 140 is supported in the axial direction on a rear surface of the frame 160, and the Oldham ring 180, as a rotation prevention mechanism the prevents the scrolling scroll 140 from rotating, is provided between the frame 160 and the orbiting scroll 140. The Oldham ring 180 is provided such that it is inserted into an Oldham ring stable-reaching groove 133 of the rotation shaft 130. The rotation prevention mechanism may also be configured as a pin & ring type mechanism as well as the Oldham ring.

In addition, an orbiting-scroll end plate (hereinafter, referred to as an orbiting end plate) 141 of the orbiting scroll 140 is formed in an approximately disk shape, and an orbiting wrap 142 that is engaged with a fixed wrap 153, which will be described below, to form compression chambers V at an inner surface and an outer surface of the fixed wrap 153 is formed on a front surface of the orbiting end plate 141.

A backpressure hole 141a through which the backpressure chamber S3 and an intermediate compression chamber V communicates with each other is formed in the orbiting end plate 141. Accordingly, due to a difference in pressure between the backpressure chamber S3 and the intermediate pressure chamber V, oil or refrigerant moves between the backpressure chamber S3 and the intermediate pressure chamber V.

In addition, a rotation shaft coupling portion 143, to which an eccentric portion 125d of a rotation shaft 130 is coupled rotatably, is formed to pass through the center of the orbiting end plate 141. The rotation shaft coupling portion 143 is formed in the shape of a cylinder, and a third bearing 173, which constitutes a bearing surface, together with the eccentric portion 125d of the rotation shaft 130, is inserted into the rotation shaft coupling portion 143 for coupling. Accordingly, a rotation shaft coupling portion (or a third bearing) 143 is formed to overlap the orbiting wrap 142 in the radial direction, and the rotation shaft coupling portion 143 constitutes a portion of the orbiting wrap 142 that is formed to be positioned most inwardly.

On the other hand, the fixed scroll 150, which is described above, is coupled to the rear surface of the frame 160 outside the main housing 110. In this case, a sealing member, such as an O-ring or a gasket, may be provided between the frame 160 and the fixed scroll 150.

A stationary-scroll orbiting end plate (hereinafter referred to as a stationary orbiting end plate) 151 of the fixed scroll 150 is formed in the shape of approximately a circular plate, and scroll side wall portion 152, which is coupled to a rear-side support surface (hereinafter referred to as a support surface) 130a of the frame 160, is formed on a front-side edge of the stationary orbiting end plate 151.

The scroll side wall portion 152 is formed in the shape of a circle, an outer circumferential surface of the scroll side wall portion 152 constitutes an external wall of the fixed scroll 150, and a front surface 152a of the scroll side wall portion 152 is coupled to the support surface 130a of the frame 160 with a sealing member 108c in between. The scroll side wall portion 152 will be again described, along with the sealing member 108c.

The fixed wrap 153, which is engaged with the orbiting wrap 142 in order to form the compression chamber V, is formed on a front surface of the stationary orbiting end plate 151. The fixed wrap 153 is formed in the shape of an involute, together with the orbiting wrap 142. In addition, the fixed wrap 153 may be formed in various shapes.

For example, in a case where the rotation shaft 130 passes through the center of the orbiting scroll 140 in order to be coupled to the orbiting scroll 140, the last compression chamber is formed in an eccentric position. Thus, there occurs a difference in pressure between the compression chambers that are formed by the fixed wrap 153 and the orbiting wrap 142. This is because, in the case of a shaft passing-through scroll compressor, the last compression chamber is formed eccentrically to the center of the scroll, resulting in a pressure of one compression chamber being greatly lower than a pressure of the other compression chamber. Therefore, in the shaft passing-through scroll compressor, as in the present embodiment, it is advantageous to form the orbiting wrap 142 and the fixed wrap 153 in a shape other than the shape of an involute.

In addition, a scroll-side intake hole 154, which communicates with a frame-side intake hole 135 in the frame 160 in order to lead a refrigerant to flow into an intake pressure chamber, is formed in the scroll side wall portion 152. In a case where the fixed wrap 153 and the orbiting wrap 142 are asymmetric, one scroll-side intake hole 154 may be formed. However, in a case where the fixed wrap 153 and the orbiting wrap 142 are symmetric, multiple scroll-side intake holes 154 may be formed.

In addition, a discharge port 155, through which the last compression chamber V communicates with the chamber S2 in order to lead the refrigerant to be discharged, is formed in the center portion of the stationary orbiting end plate 151. The discharge port 155 is formed to pass through the stationary orbiting end plate 151 in the axial direction or in the oblique direction from the compression chamber V to the discharge chamber S2. One discharge port 155 may be formed to communicate with both a first compression chamber and a second compression chamber. A first discharge port and a second discharge port may be formed to communicate with the first compression chamber and the second compression chamber, respectively, independently of each other.

In addition, a discharge valve 156 that opens and closes the discharge port 155 is installed in a rear surface of the stationary orbiting end plate 151. In a case where multiple discharge ports 155 are provided, discharge valves 156 may be individually formed and multiple discharge valves 156 may be formed integrally into one piece.

In addition, a second shaft bearing unit 157 is formed the center of the stationary orbiting end plate 151 such that a sub-bearing unit 125c of the rotation shaft 130 is rotatably inserted and is supported in the radial direction. The second shaft bearing unit 157 may be formed to extend in the axial direction from the stationary orbiting end plate 151 toward the rear housing 160 and may be formed as a result of increasing a thickness of the stationary orbiting end plate 151. However, in the latter case, a weight of the fixed scroll 150 increases, and an unnecessary portion of the fixed scroll results. This increases a length of the discharge port 155, thereby increasing a dead volume. Therefore, as in the former case, for example, the second shaft bearing unit 157 is preferably formed in a manner that a part of the fixed end plate 151 protrudes, for example, protrudes in an axial direction from a portion excluding a portion where the discharge port 155 is formed.

The second shaft bearing unit 157 is formed in the shape of a cylinder, with a rear surface thereof being closed. A second bearing 172, which constitutes bearing surface, together with the sub-bearing unit 125c of the rotation shaft 130, is inserted into an inner circumferential surface of the second shaft bearing unit 157 for coupling. The second bearing 172 may be configured with a bush bearing and may be configured with a needle bearing.

In addition, an oil accommodation space 156a, which extends further in the axial direction than an end portion of the rotation shaft 130, is formed within the rear of the second shaft bearing unit 156. The oil accommodation space 156a is positioned between the first oil supply guidance flow channel 157a and the second oil supply guidance flow channel 136, which will be described below. The first oil supply guidance flow channel 157a may communicate with the discharge chamber S2, and the second oil supply guidance flow channel 136 may communicate with bearing surfaces that are provided on the outer circumferential surfaces of the main bearing unit 132, the sub-bearing unit 134, and the eccentric portion 133, respectively.

The first oil supply guidance flow channel 157a may be formed in the fixed scroll 150 and may be formed in the rear housing 160 that will be described below. For example, in a case where the first oil supply guidance flow channel 157a is formed in the fixed scroll 150, if it is assumed that a rear surface of the fixed scroll 150, that is, a surface that faces the frame unit 112, of both flank surfaces in the axial direction, of the fixed scroll 150, is a first surface 150a, and that a surface that is opposite in direction to the first surface 150a is a second surface 150b, an oil supply protrusion portion 157 that protrudes in a direction toward the rear housing 160 is formed on the second surface 150b and the first oil supply guidance flow channel 157a is formed in the radial direction on the oil supply protrusion portion 157. A pressure reduction member 191 that will be described below is inserted into the first oil supply guidance flow channel 157a, and the pressure reduction member 191 is supported by a stopper member 195 that is inserted into an entrance end of the first oil supply guidance flow channel 157a.

One end of the first oil supply guidance flow channel 157a communicates with an outer circumferential surface of the stationary orbiting end plate 151 through an oil supply through-hole 195a that will be described below, and the other end of the first oil supply guidance flow channel 157a is formed to communicate with an inner circumferential surface of the oil accommodation space 156a.

Accordingly, due to a difference in pressure, high-pressure oil that is separate from refrigerant in the discharge chamber S2 in the rear housing 160 quickly moves into the oil accommodation space 156a along the first oil supply guidance flow channel 157a, and due to the difference in pressure, the oil is quickly supplied to each of the bearing surfaces through the second oil supply guidance flow channel 136 and each of the oil supply holes 137a to 137c. The first oil supply guidance flow channel 157a will be described below along with a foreign material blocking portion.

With reference again to FIG. 3, one first oil supply guidance flow channel 136 and multiple oil supply holes, the oil supply holes 137a, 137b, and 137c are formed in the rotation shaft 130. As described above, the first oil supply guidance flow channel 136 is formed to a predetermined depth in the axial direction, in a direction from an end portion of the rotation shaft 130, that is, from a rear surface of the rotation shaft 130 that is accommodated in the oil accommodation space 156a to a front end, the multiple oil supply holes, the oil supply holes 137a, 137b, and 137c are formed to be spaced apart by a fixed distance along the axial direction in the middle of the first oil supply guidance flow channel 136.

The multiple oil supply holes 137a, 137b, and 137c may include a second oil supply hole 137b penetrating through an outer circumferential surface of the sub-bearing unit 134, a third oil supply hole 137c penetrating through an outer circumferential surface of the eccentric portion 133, and a first oil supply hole 137a penetrating through which an outer circumferential surface the main bearing unit 132.

Accordingly, oil that is introduced from the oil accommodation space 156a into the first oil supply guidance flow channel 136 passes sequentially through the second oil supply hole 137b, the third oil supply hole 137c, and the first oil supply hole 137a, and then is supplied to each of the bearing surfaces.

The rear housing 160 is coupled to the rear surface of the fixed scroll 150. A front surface of the rear housing 160 forms the discharge chamber S2, together with the rear surface of the fixed scroll 150. An outlet port 161 that communicates with the discharge chamber S2, through which refrigerant that is discharged to the discharge chamber S2 is sent out is formed in the rear housing 160, and an oil separator (not illustrated) is installed in the outlet port 161.

On the other hand, for covering, the inverter housing 210 is coupled to one end of both ends of the main housing 110, which is opposite in direction to the rear housing 160, that is, a front end that constitutes an opening end of the main housing 110.

With reference again to FIGS. 1 to 3, the inverter housing 210 constitutes a portion of the inverter module 201 and the inverter housing 210 forms an inverter chamber S4 between the inverter housing 210 itself and an inverter cover 220.

The inverter chamber S4 accommodates inverter components 230, such as a substrate and an inverter element, and the inverter housing 210 and the inverter cover 220 are fastened to each other using a bolt. The inverter housing 210 may be first assembled to the main housing 110, and then the inverter cover 220 may be assembled to the inverter housing 210. The inverter housing 210 and the inverter cover 220 may be first assembled and then inverter housing 210 may be assembled to the main housing 110. The former case and the latter case are distinguished according to a method of assembling the inverter housing 210 to the main housing 110.

The motor-operated compressor according to the present embodiment, as described above, operates as follows.

That is, the driving motor 120 is powered on, the rotation shaft 130 rotates together with the rotor 122 and transfers a rotational force to the orbiting scroll 140. Thus, with the Oldham ring 180, the orbiting scroll 140 performs orbiting motion. Then, the compression chamber V continuously moves toward a center axis, and thus a volume thereof decreases.

Then, refrigerant is introduced into the motor room S1, which is an intake space, through an inlet port 101a. The refrigerant that is introduced in the motor room S1 passes through a flow channel that is formed in an outer circumferential surface of the stator 121 and the inner circumferential surface of the main housing 110, or through a gap between the stator 121 and the rotor 122, and flows into the compression chamber V along an intake flow channel Fg that is provided in the main housing 110 and the fixed scroll 150.

Then, the refrigerant is compressed by the orbiting scroll 140 and the fixed scroll 150 and the compressed refrigerant is discharged into the discharge chamber S2 through the discharge port 155. Oil is separated from the compressed refrigerant in the discharge chamber S2. The refrigerant from which the oil is separated is sent out into a cooling cycle system through the outlet port 161. On the other hand, the oil as a mist is supplied to each of the bearing surfaces through the first oil supply guidance flow channel 157a, the oil accommodation space 156a, the second oil supply guidance flow channel 136, and the oil supply holes 137a to 137c, which constitute an oil supply passage. Some of the oil is introduced into the backpressure chamber S3 and generates backpressure that supports the orbiting scroll 140 toward the direction of the fixed scroll 150.

Then, due to the backpressure in the backpressure chamber S3, the orbiting scroll 140 is supported toward the direction of the fixed scroll 150 and thus, the compression chamber V between the orbiting scroll 140 and the fixed scroll 150 is sealed. At this time, some of the oil in the backpressure chamber S3 is introduced into the compression chamber V through the backpressure hole 141a that is provided in the orbiting end plate 141. On the other hand, some of the oil flows between the main bearing unit 132 and the first bearing 171 and then into the motor room S1, and thus, as described above, flowing pressure is generated in the backpressure S3.

On the other hand, the rotation shaft is coupled eccentrically to the orbiting scroll. Thus, the center of gravity of the rotation shaft moves farther in a direction that deviates eccentrically from the axial center of the rotation shaft. Thus, when the rotation shaft rotates, shaking occurs due to an eccentric displacement of the center of gravity. This causes a problem in that vibration increases and the efficiency of the compressor decreases.

Accordingly, in a compressor in the related art, in order to compensate for an eccentric displacement of the center of gravity from the axial center of the rotation shaft, a balance weight with predetermined mass is installed, and thus the center of gravity of the eccentric rotation shaft moves to be at the axial center of the rotation shaft.

For example, in the compressor in the related art, in the backpressure chamber S3, the balance weight is coupled to the rotation shaft or is installed on the rotor 122 that is coupled to the rotation shaft. The balance weight is made of a metal material with predetermined mass in order to move the center of gravity of the eccentric rotation shaft to be at the axial center of the rotation shaft.

In this manner, due to the balance weight with the predetermined mass, a problem occurs in that the driving motor has to unnecessarily increase a power output. Particularly, the balance weight that is installed on the rotor accounts for half or more of a weight of the rotor and this causes a decrease in the efficiency of the driving motor and an unnecessary increase in the power output.

Therefore, according to the present invention, instead of the balance weight that is installed on the rotor 122, the eccentricity compensation unit 123 is proposed that minimizes an increase in the mass of the rotor and compensate for an eccentric displacement of the center of gravity of the eccentric rotation shaft.

The eccentricity compensation unit 123 according to the present invention and the driving motor 120 in which the eccentricity compensation unit 123 will be described in detail below.

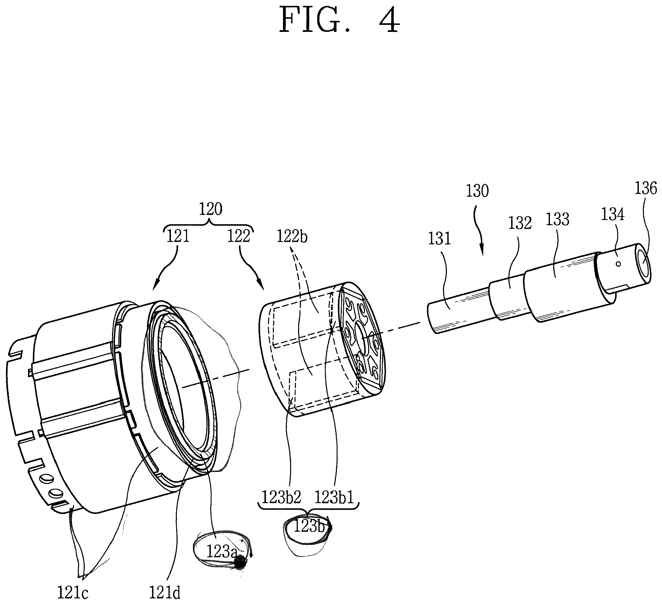

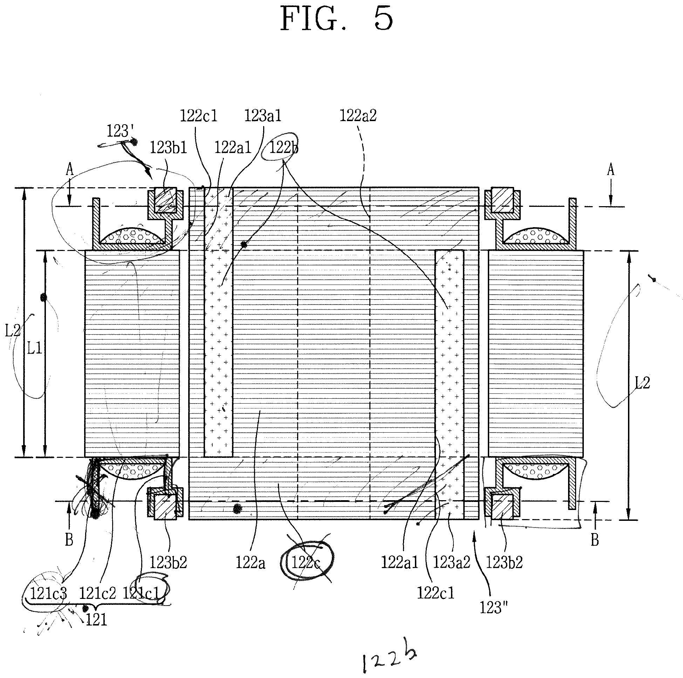

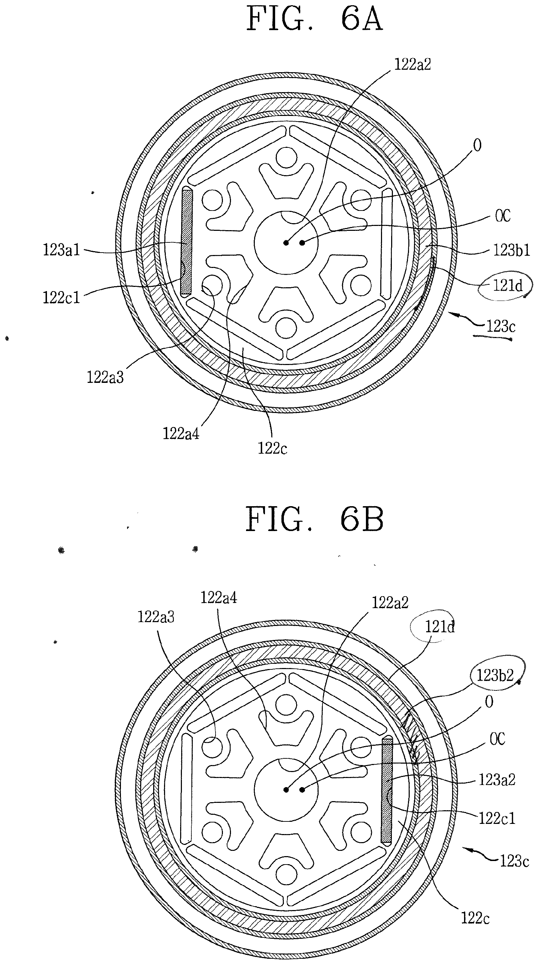

FIG. 4 is a perspective diagram illustrating a driving motor and a rotation shaft according to an embodiment of the present invention. FIG. 5 is a vertically cross-sectional diagram illustrating the driving motor in FIG. 4. FIG. 6A is a cross-sectional diagram taken along line A-A in FIG. 5. FIG. 6B is a cross-sectional diagram taken along line B-B in FIG. 5.

As described, the driving motor 120 according to the present embodiment includes the stator 121 and the rotor 122.

The stator 121 includes a stator core 121a, a winding coil 121b, and an insulator 121c. In addition, the stator 121 may further include an insulator cover (not illustrated) that is formed to cover the insulator.

The stator core 121a is formed as a result of stacking multiple plates, of which is configured with an iron plate, on top of one another. The stator core 121a includes a yoke that constitutes a body of the stator core 121a and teeth, around each of which the winding coil 121b is wound.

The yoke is formed in the shape of a cylinder with a hollow cylinder, and an outer circumferential surface thereof is fixedly coupled to the inner circumferential surface of the main housing 110 using the hot pressure fitting method. The teeth are formed to extend from the inner circumferential surface of the yoke portion and are arranged along a circumferential direction. The teeth are formed to cover at least a portion of the rotor 122.

The winding coil 121b is wound around each of the teeth, and, when supplied with electric power, forms a magnetic field. Thus, the magnetic interaction of the winding coil 121b with the rotor 122 rotates the rotor 122.

The insulator 121c is formed of a PBT-based plastic material and provide insulation between the winding coil 121b and the stator core 121a. The insulators 121c are provided on one end and the other end of the stator core 121a, respectively. The winding coils 121b results from winding wire with the stator core 121a between the insulators 121c provided on the one end and the other end of, respectively, of the stator core 121a. Accordingly, the winding coil 121b is configured such that, due to the insulator 121c, it is at some distance away from the stator core 121a.

On the other hand, the insulator 121c is formed in a shape corresponding to a cross section of the stator core 121a and thus covers one surface and the other surface of the stator core 121a. More specifically, the insulator 121c includes an inner wall 121c2 that is formed to cover the one surface and the other surface of the stator core 121a, and an internal wall 121c1 and an external wall 121c3 that are bent in the same direction and extend from the inner wall 121c2 in a facing manner.

The inner wall 121c2 is formed to have the shape that corresponds to the yoke and the teeth of the stator core 121a and is brought into contact with the one surface and the other surface of the stator core 121a. The internal wall 121c1 and the external wall 121c2 extend along a direction that intersects the inner wall 121c2, that is, in the axial direction. Moreover, the insulator 121c plays a role in not only insulating but also protecting the winding coil 121a. Therefore, the insulator 121c extends by a distance that is greater than a thickness of the winding coil 121b that is positioned to be brought into contact with the inner wall 121c2 of the insulator 121c to prevent contact or interference with another member.

In addition, the side wall 121c1 and the external wall 121c2 each extend in the radial direction to have the shape of a ring. At this point, the internal wall 121c1 is formed along an inner circumferential surface of the stator core 121a (one surface of the teeth portion that faces the rotor core 122a), and the external wall 121c3 extends along an outer circumferential surface of the stator core 121a (an outer circumferential surface of the yoke). That is, at least one portion of the internal wall 121c1 is formed to face the outer circumferential surface of the rotor 122, and the external wall 121c2 is formed to face the inner circumferential surface of the main housing 110.

On the other hand, the rotor core 122a that constitutes a body of the rotor core 122a, and a magnetic member 122b that is inserted in the rotor core 122a.

The rotor core 122a, as a whole, is formed to have the shape of a cylinder. In the same as the stator core 121a, the rotor core 122a is formed as a result of stacking thin plates on top of one other in the axial direction of the rotation shaft 130. As described above, the rotor core 122a and the stator core 121a are formed such that a length L1 in the axial direction, of the rotor core 122a is substantially the same as a length in the axial direction, of the stator core 121a.

Moreover, a magnetic member accommodation groove 122a1, a rotation shaft coupling portion 122a2, a rotor core fastening groove 122a3, and a weight reducing groove (122a4) are formed in the rotor core 122a.

The magnetic member accommodation groove 122a1 is formed to pass through the rotor core 122a in the axial direction. The magnetic member 122b that is accommodated in a magnetic member accommodation groove 122a is formed in the shape of a rectangle such that its one surface is relatively long.

The magnetic member accommodation groove 122a1 forms a space that corresponds to a shape of the magnetic member 122b, and surfaces that correspond to both side surfaces which intersect with the one surface of the magnetic member 122b are spaced apart from each other by a predetermined gap so as to form a flux barrier.

The one surface of the magnetic member 122b is positioned to face a radial direction of the rotor core 122a, and multiple magnetic members 122b are provided along a circumferential surface of the rotor core 122a. Accordingly, the magnetic members 122b, as a whole, are arranged to form a polygonal shape. For example, in a case where six magnetic members 122b are provided, the six magnetic members 122b, as a whole, may be arranged in the rotor core 122a to form a polygonal shape.

The rotation shaft coupling portion 122a2 is formed to pass through the center portion of the rotor core 122a. In addition, the rotation shaft coupling portion 122a2 is formed to have a diameter and a circular shape that correspond to an outer circumference of the rotation shaft 130. The shaft portion 131 of the rotation shaft 130 may be inserted into the rotation shaft coupling portion 122a2 and then coupled to it using the hot pressure fitting method.

A fastening member, such as a bolt, is inserted into the rotor core fastening hole 122a3 such that the rotor core 122a that is made up of multiple plates is fixed securely. The rotor core fastening hole 122a3 is formed such that its cross section is circular to correspond to a threaded outer circumferential surface of the bolt. The rotor core fastening hole 122a3 extends along the axial direction of the rotor core 122a. The rotor core fastening hole 122a3 is provided in plurality along the circumferential direction of the rotor core 122a in a spaced manner.

The weight reducing groove 122a4 is formed through the rotor core 122a along the axial direction to reduce a weight of the rotor 122, and is formed to have a cross section with a geographic shape.

With reference to the drawing, the eccentricity compensation unit 123 according to the present invention includes a first member 123a that is provided on the stator 121, and second member 123b that is provided on the rotor 122. The first member 123a and the second member 123b have a relationship that magnetic forces are applied to each other.

For example, the first member 123a is made of a ferromagnetic material, such as a metal material, and the second member 123b is made of a magnetic member, such as a permanent magnet. A magnetic attraction force acts between the first member 123a and the second member 123b. At this point, the second member 123b is provided to be positioned to be eccentric toward an opposite side to the center of gravity of the rotation shaft, from the axial center O of the rotation shaft 130, so as to compensate for the eccentric displacement of the center of gravity of the rotation shaft 130 using the magnetic force.

More, the first member 123a extends along the circumferential direction. That is, the first member 123a is formed to have the shape of a ring. Accordingly, regardless of rotation of the second member 123b, the first member 123a keeps facing the second member 123b. That is, the magnetic attraction force continues to act between the first member 123a and the second member 123b.

At this point, the second member 123b collectively refers to a second member 123b1 and a second member 123b2 that are provided on a first eccentricity compensation portion 123' and a second eccentricity compensation portion 123", respectively, which will be described below. However, for the convenience of description, the second member 123b1 of the first eccentricity compensation portion 123' will be described representatively.

In this manner, the magnetic attraction force that acts eccentrically with respect to the rotation shaft 130 continues acting on the rotation shaft 130, and thus the center of gravity of the rotation shaft moves to be at the axial center O of the rotation shaft 130. That is, the eccentricity compensation unit 123 plays a role as the balance weight that is made of a metal material having a predetermined weight, using the force of magnetic attraction.

On the other hand, the first member 123a and the second member 123b that constitute the eccentricity compensation unit 123 are provided on the stator 121 and the rotor 122, respectively, and are positioned adjacent to each other.

On the other hand, the first member 123a of the eccentricity compensation unit 123 is provided on the insulator 121c. More specifically, with a first member coupling portion 121d that is formed on the insulator 121c, the first member 123a is coupled fixedly.

The first member coupling portion 121d is provided on the internal wall 121 c1 of the insulator 121c. More specifically, the first member coupling portion 121d is formed on an end portion of the internal wall 121 c1. The first member coupling portion 121d is formed of a PBT-based plastic material in the same manner as the insulator 121c, and the insulator 121c is formed in a manner that is integrally combined with the insulator 121c, using injection molding. However, no limitation to this is imposed. The insulator 121c and the first member coupling portion 121d are formed individually and then are combined.

In addition, the first member coupling portion 121d is formed in a manner that extends along the circumferential direction to correspond to a shape of the first member 123a. That is, the first member coupling portion 121d is formed to have the shape of a ring. Moreover, the first member coupling portion 121d forms a predetermined space to accommodate at least one portion of the first member 123a. For coupling, the first member 123a is inserted into the predetermined space. That is, the first member 123a is spaced apart from a surface of the stator core 121a by a predetermined gap.

On the other hand, the first member 123a and the second member 123b are provided on the stator 121 and the rotor 122, respectively, and are positioned to be spaced apart from each other. The magnetic attraction force between the first member 123a and the second member 123b that are spaced apart from each other is in proportion to magnetic flux density, and the magnetic flux density is in inverse proportion to a distance between them. That is, as the distance between the first member 123a and the second member 123b becomes short, the magnetic force between them increases more. Therefore, the first member 123a and the second member 123b have to be arranged to be closest to each other.

In this respect, it is desirable that the first member 123a and the second member 123b are arranged to overlap each other in the radial direction of the rotation shaft 130. That is, the first member 123a and the second member 123b are arranged to face each other.

As described above, the first member 123a is coupled to the insulator 121c, and thus is spaced apart by a predetermined gap from a surface of the stator core 121a. Generally, the stator core 121a and the rotor core 122a are formed to have substantially the same length L1 in the axial direction. Therefore, the second member 123b that is provided on the rotor 122 has to be spaced apart by a predetermined gap from a surface of the rotor 122 or to extend in the axial direction, so as to face the first member 123a.

The second member 123b that is provided on the rotor 122 will be described in detail below. As described above, the second member 123b is configured with a magnetic member, such as a permanent magnet, that has a magnetic property.

The second member 123b according to an embodiment of the present invention is formed integrally with the magnetic member 122b. In other words, a least one magnetic member 122b of the multiple magnetic members 122b, which are provided on the rotor core 122a, extends in the axial direction to form the second member 123b.

At this point, the magnetic member 122b that extends to form the second member 123b is the magnetic member 122b that is provided in a position that is opposite to the center of the eccentric portion 133 of the rotation shaft 130, with respect to the axial center O of the rotation shaft 130. However, on the other hand, in a case where a position that is opposite to the center of the eccentric portion 133 is between adjacent magnetic members 122b of the multiple magnetic members 122b, with respect to the axial center O of the rotation shaft 130, the second members 123b are formed by extending the two magnetic members 122b extending in the axial direction.

On the other hand, according to an embodiment of the present embodiment, the magnetic member 122b is configured with a neodymium (Nd) magnet. In the present embodiment, because the second member 123b is formed by extending the magnetic member 122b in the axial direction, the second member 123b is also configured with a neodymium magnet (an Nd magnet). However, no limitation to this is imposed, and, as described below, the second member and the magnetic member are configured with different members, respectively. At this time, the second member is configured with a ferrite magnet.

In this case, the magnetic member 122b that extends to form the second member 123b is formed to have a length L2 that is longer than the length L1 in the axial direction, of the rotor core 122a. The magnetic member 122b that extends to form the second member 123b, is formed by extending in the axial direction to face the first member 123a which is provided to be spaced apart from the surface of the stator core 121a. Accordingly, the magnetic member 122b that extends to form the second member 123b is positioned to overlap the first member 123a in the radial direction.

On the other hand, the rotor core 122a may further include a rotor core extension portion 122c to fix the magnetic member 122b that extends to form the second member 123b.

With reference to FIGS. 5, 6A, and 6B, the rotor core extension portion 122c is formed in a shape that corresponds to a cross section of the rotor core 122a. The rotor core extension portion 122c is formed by extending the rotor core 122a in the axial direction.

That is, multiple plates that make up the rotor core 122a are further stacked on top of one another in the axial direction and thus the rotor core extension portion 122c is formed. In other words, the number of plates that make up the rotor core 122a is greater than the number of plates that make up the stator core 121a. In this case, there is no need to manufacture a separate member in order to fix the second member 123b. Thus, it is easy to manufacture the rotor 122 that includes the rotor core extension portion 122c.

On the other hand, the rotor core extension portion 122c includes second member accommodation groove 122c1 that corresponds to the magnetic member accommodation groove 122a1 of the rotor core 122a. A portion that corresponds to the second member 123b, of the magnetic member 122b that extends to form the second member 123b is accommodated in the second member accommodation groove 122c1. That is, at least one portion of the magnetic member 122b is accommodated in the second member accommodation groove 122c1.

The second member accommodation groove 122c1 is formed in the rotor core extension portion 122c in the axial direction and overlaps the magnetic member accommodation groove 122a1 in the rotor core 122a in the axial direction. That is, the magnetic member accommodation groove 122a1 and the rotor core extension portion 122c are formed continuously in the axial direction.

With this structure of the eccentricity compensation unit 123, the sum of a weight of the magnetic member 122b that extends to form the second member 123b, and a weight of the rotor core extension portion 122c is smaller than the existing balance weight that is formed of a metal material such as brass, and thus, weights of the rotor 122 and the rotation shaft 130 can be reduced by that difference.

Accordingly, an unnecessary output of the driving motor 120 can be reduced as much as the reduced weight while compensating for the eccentric center of gravity of the rotation shaft 130. Thus, the overall efficiency of the compressor 100 can be increased.

Moreover, the rotor core extension portion 122c includes an extension portion fastening hole 122c3 that corresponds to the rotor core fastening hole 122a3 of the rotor core 122a. In this case, a separate process of, and a configuration for, coupling the rotor core 122a and the rotor core extension portion 122c are unnecessary, and thus, the productivity of the rotor 122 can be improved.

In addition, instead of the rotor core 122a and the rotor core extension portion 122c being made of the same material, the rotor core extension portion 122c may be formed of a different material than the rotor core 122a. For example, the rotor core extension portion 122c may be formed of an injection-molded plastic material that has a lower specific gravity than multiple plates which make up the rotor core 122a. Accordingly, the weight of the rotor 122 can be further reduced.

On the other hand, the eccentricity compensation unit 123 includes the first eccentricity compensation portion 123' that is provided at one side of the driving motor 120 and the second eccentricity compensation portion 123" that is provided at the other side of the driving motor 120. With reference to the drawings, the first eccentricity compensation portion 123' is provided at the rear side of the driving motor 120, and the second eccentricity compensation portion 123" is provided at the front side of the driving motor 120.

That is, the first eccentricity compensation portion 123' is formed at one side of the stator 121 and the rotor 122 to face the compression unit 105, and the second eccentricity compensation portion 123" is firmed at the other side of the stator 121 and the rotor 122 to be opposite to the first eccentricity compensation portion 123'.

At this point, the second member 123b1 of the first eccentricity compensation portion 123' is formed by the magnetic member 122b, which is provided at a position opposite to the center Oc of the eccentric portion 133 with respect to the axial center O of the rotation shaft 130. On the other hand, the second member 123b2 of the second eccentricity compensation portion 123" is provided in at an opposite side to the second member 123b1 of the first eccentricity compensation portion 123'. That is, the second member 123b2 of the second eccentricity compensation portion 123" is formed by the magnetic member 122b that is provided at a position that overlaps the center Oc of the eccentric portion 133 in the radial direction.

At this point, the second member 123b1 of the first eccentricity compensation portion 123' and the second member 123b2 of the second eccentricity compensation portion 123" are formed in a manner of extending the magnetic members 122b forming them, respectively, in opposite directions. In other words, the second member 123b1 of the first eccentricity compensation portion 123' is formed by extending the magnetic member 122b toward the rear side of the compressor 100. On the other hand, the second member 123b2 of the second eccentricity compensation portion 123" is formed by extending the magnetic member 122b toward the front side of the compressor 100.

In this case, rotation moments of the first eccentricity compensation portion 123' and the second eccentricity compensation portion 123" with respect to the center in the axial direction can reduce shaking due to the eccentric displacement of the center of gravity of the rotation shaft 130 and the orbiting motion.

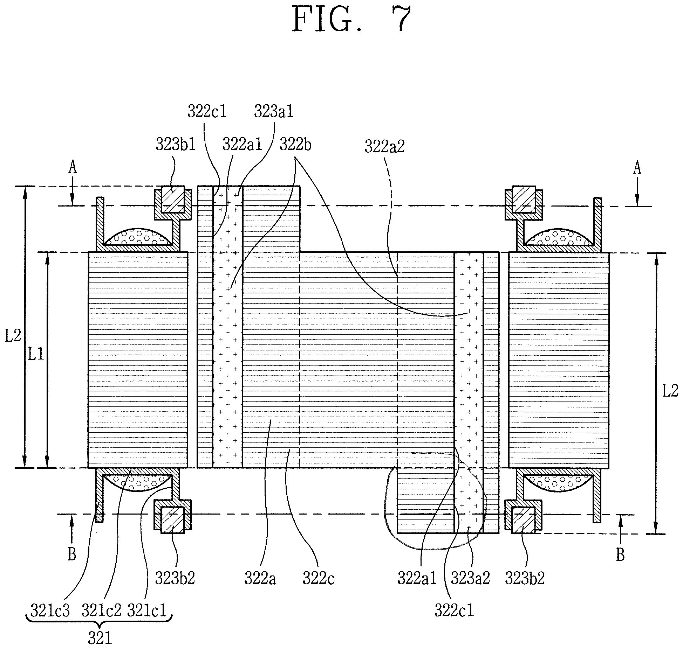

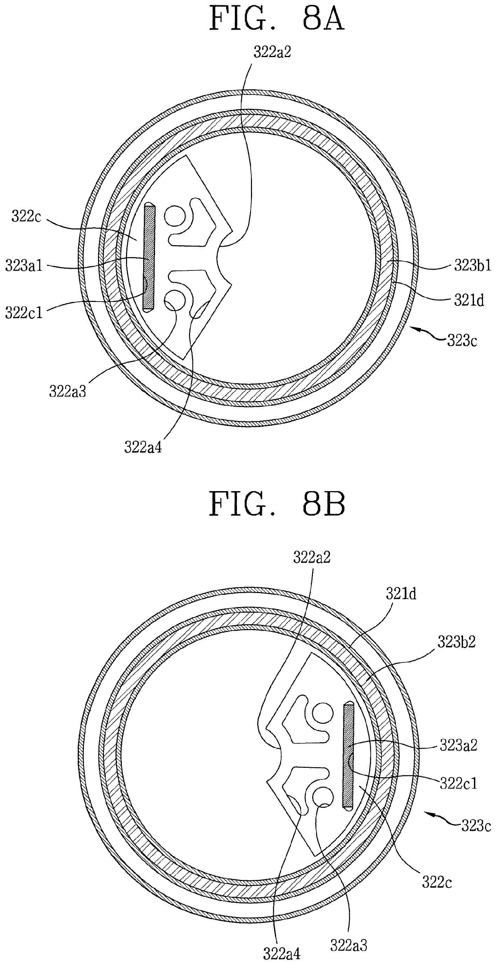

On the other hand, FIG. 7 is a vertically cross-sectional diagram of a driving motor according to another embodiment of the present invention. FIG. 8A is a cross-sectional diagram of the driving motor taken along line C-C in FIG. 7. FIG. 8B is a cross-sectional diagram of the driving motor taken along line D-D in FIG. 7.

According to the present embodiment, a rotor core extension portion 322c is formed differently in cross section than a rotor core 322a. That is, the rotor core extension portion 322c is formed to have a cross section in an arcuate shape as it is formed on a part of the circular cross section of the rotor core 322a along the circumferential direction. However, no limitation to this is imposed, and the rotor core extension portion 322c may be formed in the shape of a semicircle.

That is, the rotor core extension portion 322c is formed to be eccentric to one side of the rotation shaft 130. At this point, the rotor core extension portion 322c may be formed eccentrically at an opposite position to the center Oc of the eccentric portion 133 with respect to the axial center O of the rotation shaft 130.

In terms of a cross section of the rotor core 322a, the rotor core 322a is divided into a first portion on which a second member 322b is provided, and an imaginary second portion on which the second member 322b is not provided, and the rotor core extension portion 322c is formed only on the first portion.

According to the present embodiment, a weight that results from the rotor core extension portion 322c can be further reduced when compared with an embodiment in which the rotor core extension portion 122c is formed in the same shape as the rotor core 122a. Accordingly, a weight of the rotor 122 can be further more reduced. In addition, the rotor core extension portion 122c can be formed by punching one or several of the multiple plates that make up the existing manufactured rotor core 322a, and thus can be easily manufactured.

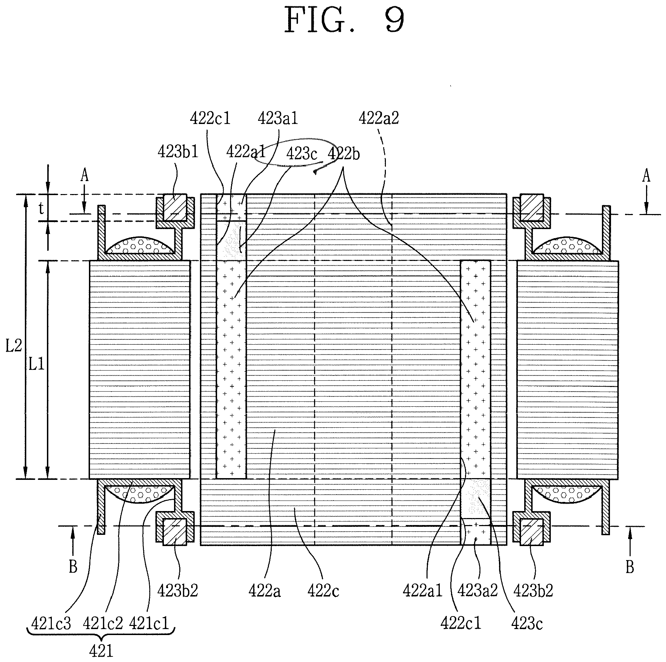

On the other hand, FIG. 9 is a diagram illustrating a relationship between a magnetic member and a second member according to still another embodiment of the present invention.

In the present embodiment, a second member 423b is not formed integrally with a magnetic member 422b. That is, the second member 423b is configured with a member independently of the magnetic member 422b. In this case, a first member 423b and the second member 423b are formed to have substantially the same length t in the axial direction. In addition, the magnetic member 422b is formed to have substantially the same length L1 in the axial direction as a rotor core 422a.

More specifically, the second member 423b that is formed as a permanent magnet having a magnetic property may be provided to be positioned to be spaced in the axial direction apart from the magnetic member 422b that is provided on the rotor core 422a. For this reason, an eccentricity compensation portion 423 may further include a separation member 423c that separates the second member 423b and the magnetic member 422b from each other.

Similar to the foregoing embodiments, the second member 423b is formed to have the same cross section as the magnetic member 422b, and is formed to overlap the magnetic member 422b in the axial direction. In addition, as in the embodiments described above, a magnetic member accommodation groove 422a1 and a second member accommodation groove 422c1 are formed continuously in the axial direction. The separation member 423c is provided between the second member 423b and the magnetic member 422b in order to separate the second member 423b and the magnetic member 422b from each other.

Unlike the first member 423a and the second member 423b, the separation member 423c is formed of a non-magnetic material. For example, the separation member 423c is formed of a plastic material that is relatively lighter in weight than a metal material.

According to the present embodiment, the number of magnetic members used, made of a permanent magnet, can be more reduced when compared with the foregoing embodiments. Accordingly, the number of comparatively high-priced permanent magnets used can be reduced and thus the manufacturing cost of the rotor 122 can be reduced. Furthermore, instead of the permanent magnet made of a metal material, the separation member 423c made of a relatively light material is used, and thus the weight of the rotor 122 can be further reduced.

On the other hand, the eccentricity compensation portion can be used together with the balance weight 138 that compensates for the eccentric displacement of the center of gravity of the rotation shaft 130 that is provided in the backpressure chamber S3. Or, only the eccentricity compensation portion according to the present invention can be used. This may depend on the designer's intention.

## Claims

1. A motor-operated compressor, comprising:
a rotation shaft (130);
a first scroll (140)that performs an orbiting motion and is provided with an eccentric coupling portion (143) eccentrically coupled to the rotation shaft (130);
a second scroll (150) coupled to the first scroll (140) to form a pair of compression chambers (V);
a rotor (122) coupled to the rotation shaft (130);
a stator (121) that forms an accommodation space (156a) in which the rotor (122) is provided and rotates the rotor (122) by magnetic interaction with the rotor (122); and
an eccentricity compensation portion (123) that compensates for an eccentric displacement of the center of gravity of the rotation shaft (130), in response to the orbiting motion of the first scroll (140),
wherein the eccentricity compensation portion (123) includes:
a first member (123a) that is provided on one end of the stator (121); and
a second member (123b, 323b) that is positioned on the rotor (122) to be adjacent to the first member (123a) such that a magnetic attraction force acts between the second member (123b) and the first member (123a).

2. The motor-operated compressor of claim 1, wherein the first member (123a) extends along a circumferential direction of the stator (121), and
wherein the second member (123b) has a magnetic property and is located at a position opposite to the eccentric coupling portion (143) with respect to the center of the rotor (122).

3. The motor-operated compressor of claim 1 or 2, wherein the rotor (122) includes a plurality of magnetic members (122b) arranged in a spaced manner along the circumferential direction of the rotor (122), and
wherein the second member (123b) is positioned to overlap at least one or several of the plurality of magnetic members (122b) in an axial direction.

4. The motor-operated compressor of claim 3, wherein the rotor (122) includes:
a rotor core (122a) that is provided with a magnetic member accommodation groove (122a1) to accommodate the plurality of magnetic members (122b) therein; and
a rotor core extension portion (122c) formed on the rotor core (122a) and provided with a second member accommodation groove (122c1) to accommodate the second member therein.

5. The motor-operated compressor of claim 4, wherein the magnetic member accommodation groove (122a1) and the second member accommodation groove (122c1) extend in the axial direction.

6. The motor-operated compressor of claim 5, wherein at least one of the magnetic members (122b) extends in the axial direction to form the second member (123b).

7. The motor-operated compressor of claim 5, wherein the rotor (122) further includes a separation member (423c) that is provided between at least one of the magnetic members and the second member so that the second member and the magnetic member are spaced apart from each other in the axial direction.

8. The motor-operated compressor of at least one of claims 4 to 7, wherein the rotor core extension portion (122c) is formed to be eccentric from the center of the rotation shaft (130).

9. The motor-operated compressor of any one of claims 1 to 8, wherein the stator (121) includes a first member coupling portion (121d) that is formed to couple the first member (123a) to the stator (121).

10. The motor-operated compressor of claim 9, wherein the stator includes:
a stator core (121a) that is formed by stacking a plurality of plates;
a winding coil (121b) that is wound around the stator core (121a); and
an insulator (121c) that is provided on one end and the other end of the stator core (121a) to insulate between the winding coil (121b) and the stator core (121a),
wherein the first member coupling portion (121d) is formed on the insulator (121c) such that the first member (123a) is spaced apart from the stator core (121a) in the axial direction, and
wherein the second member (123b) extends in the axial direction to correspond to the first member (123a).

11. The motor-operated compressor of claim 10, wherein the insulator (121c) is provided with an internal wall (121c1) and an external wall (121c3) that extend in the axial direction and face each other with the winding coil (121b) interposed therebetween, and
wherein the first member coupling portion (121d) is provided on the internal wall (121c3).

12. The motor-operated compressor of any one of claims 1 to 11, wherein the eccentricity compensation portion (123) includes:
a first eccentricity compensation portion (123') that is provided at one side of the rotor (122) and the stator (121) to face the first orbiting scroll (140); and
a second eccentricity compensation portion (123") that is provided at the other side of the rotor (122) and the stator (121).

13. The motor-operated compressor of claim 12, wherein a second member of the second eccentricity compensation portion (122") is provided at an opposite position to a second member of the first eccentricity compensation portion (122') with respect to the center of the rotation shaft (130).

## Amended claims

### Amended claims in accordance with Rule 137(2) EPC.

1. A motor-operated compressor, comprising:
a rotation shaft (130);
a first scroll (140) that performs an orbiting motion and is provided with an eccentric coupling portion (143) eccentrically coupled to the rotation shaft (130);
a second scroll (150) coupled to the first scroll (140) to form a pair of compression chambers (V);
a rotor (122) coupled to the rotation shaft (130);
a stator (121) that forms an accommodation space (156a) in which the rotor (122) is provided and rotates the rotor (122) by magnetic interaction with the rotor (122); and
an eccentricity compensation portion (123) that compensates for an eccentric displacement of the center of gravity of the rotation shaft (130), in response to the orbiting motion of the first scroll (140),
wherein the eccentricity compensation portion (123) includes:
a first member (123a) that is provided on one end of the stator (121); and
a second member (123b, 323b) that is positioned on the rotor (122) to be adjacent to the first member (123a) such that a magnetic attraction force acts between the second member (123b) and the first member (123a),
wherein the stator (121) includes a first member coupling portion (121d) that is formed to couple the first member (123a) to the stator (121),
wherein the stator includes:
a stator core (121a) that is formed by stacking a plurality of plates;
a winding coil (121b) that is wound around the stator core (121a); and
an insulator (121c) that is provided on one end and the other end of the stator core (121a) to insulate between the winding coil (121b) and the stator core (121a),
**characterized in that** the first member coupling portion (121d) is formed on the insulator (121c) such that the first member (123a) is spaced apart from the stator core (121a) in the axial direction, and
the second member (123b) extends in the axial direction to correspond to the first member (123a).

2. The motor-operated compressor of claim 1, wherein the first member (123a) extends along a circumferential direction of the stator (121), and
wherein the second member (123b) is located at a position opposite to the eccentric coupling portion (143) with respect to the center of the rotor (122).

3. The motor-operated compressor of claim 1 or 2, wherein the rotor (122) includes a plurality of magnetic members (122b) arranged in a spaced manner along the circumferential direction of the rotor (122), and
wherein the second member (123b) is positioned to overlap at least one or several of the plurality of magnetic members (122b) in an axial direction.

4. The motor-operated compressor of claim 3, wherein the rotor (122) includes:
a rotor core (122a) that is provided with a magnetic member accommodation groove (122a1) to accommodate the plurality of magnetic members (122b) therein; and
a rotor core extension portion (122c) formed on the rotor core (122a) and provided with a second member accommodation groove (122c1) to accommodate the second member therein.

5. The motor-operated compressor of claim 4, wherein the magnetic member accommodation groove (122a1) and the second member accommodation groove (122c1) extend in the axial direction.

6. The motor-operated compressor of claim 5, wherein at least one of the magnetic members (122b) extends in the axial direction to form the second member (123b).

7. The motor-operated compressor of claim 5, wherein the rotor (122) further includes a separation member (423c) that is provided between at least one of the magnetic members and the second member so that the second member and the magnetic member are spaced apart from each other in the axial direction.

8. The motor-operated compressor of at least one of claims 4 to 7, wherein the rotor core extension portion (122c) is formed to be eccentric from the center of the rotation shaft (130).

9. The motor-operated compressor of any one of claims 1 to 8, wherein the insulator (121c) is provided with an internal wall (121c1) and an external wall (121c3) that extend in the axial direction and face each other with the winding coil (121b) interposed therebetween, and
wherein the first member coupling portion (121d) is provided on the internal wall (121c3).

10. The motor-operated compressor of any one of claims 1 to 9, wherein the eccentricity compensation portion (123) includes:
a first eccentricity compensation portion (123') that is provided at one side of the rotor (122) and the stator (121) to face the first orbiting scroll (140); and
a second eccentricity compensation portion (123") that is provided at the other side of the rotor (122) and the stator (121).

11. The motor-operated compressor of claim 10, wherein a second member of the second eccentricity compensation portion (122") is provided at an opposite position to a second member of the first eccentricity compensation portion (122') with respect to the center of the rotation shaft (130).
